# EUROPEAN PATENT SPECIFICATION

(11) **EP 2 230 006 B1**
(45) Date of publication and mention of the grant of the patent: **24.02.2016**
(21) Application number: 10154797.4
(22) Date of filing: 26.02.2010
(51) Int. Cl.: B01J 2/04, B01J 2/26

(54) **DOSAGE CYLINDER FOR PASTILLATION MACHINE**
DOSIERUNGSZYLINDER FÜR PASTILLIERUNGSMASCHINE
CYLINDRE DE DOSAGE POUR UNE MACHINE DE PASTILLATION

(30) Priority: 02.03.2009 IT MI20090303
(43) Date of publication of application: 22.09.2010
(73) Proprietor: SBS Steel Belt Systems S.R.L., 20146 Milano (IT)
(72) Inventor: Lisciandra, Luigi, 20146, Milano (IT); Virgilio, Gianluigi, 20146, Milano (IT)
(74) Representative: Ponzellini, Gianmarco

(56) References cited:
- EP-A- 0 422 313
- EP-A- 0 511 197
- WO-A-03/011447

## Description

The invention relates to a dosage drum for pastillation machines.

Pastillation machines enable aggregation of a material which is in a powder state into doses or pastilles of predetermined dimensions such as to make manipulation, storage, transport or working of the material simple, faster and more secure.

Pastillation machines usually comprise a dosage drum which has the function of depositing a sequence of doses or drops of molten material (obtained from the original powder material) on a conveyor belt.

Conditioning means are associated to the conveyor belt which have the function of cooling the molten material such as to rapidly solidify the deposited doses or drops. At the end of the conveyor belt, the doses solidified into pastilles are collected such as to be sent on to successive work operations or into storage.

In these machines, the effectiveness with which the drops or doses of molten material are released onto the conveyor belt is of particular importance.

A first type of dosage drum, known for example from document US 4279579, is constituted by two concentric cylindrical containers.

The first cylinder receives the molten material to be dosed and transfers it to the second cylinder, which is keyed on the first cylinder.

In particular, the first cylinder comprises a row of openings, which face the second cylinder, through which the molten material flows.

The second cylinder is provided with parallel and distanced rows of holes which cross the cylinder mantle.

The second cylinder rotates with respect to the first cylinder such that when a row of through-holes is facing the openings of the first cylinder, the molten material crosses the holes of the second cylinder and is deposited on the conveyor belt (positioned immediately below the dosage drum).

During rotation thereof, the second cylinder faces successive rows of holes at the openings of the first cylinder, realising a succession of corresponding flows of drops which are deposited on the conveyor belt and distanced from the dosing cylinder.

The constant-velocity rotation of the second cylinder with respect to the first guarantees that a same quantity of molten material always flows into of the through-holes. When the molten material flows through the holes of the second cylinder and deposits on the conveyor belt, a part of the molten material tends, by effect of the viscosity thereof, to remain in adherence to the external surface of the second cylinder.

The accumulation of the material at each revolution of the second cylinder tends to obstruct the holes thereof, so the material remaining in adhesion on the external surface of the second cylinder has to be removed by a scraper.

The material is intercepted by the scraper and this enables the second cylinder to be kept clean; thus correct machine functioning is preserved.

It has however been noted that during the mechanical action of removal of molten material by the scraper, a part of the molten material intercepted by the scraper tends to get pushed internally of the through-holes, where it obstructs them.

Problems arising during the re-start of the cylinder when it has not been properly cleaned are obvious.

To obviate these drawbacks, a dosage drum has been developed (known for example from document EP 511197) which does not require the use of scrapers for removing the molten material tending to remain in adherence on the outside of the second cylinder.

In this type of dosage drum the external surface of the second cylinder is not smooth, i.e. is not constituted by a continuous surface constellated by holes.

In particular, the external surface of the second cylinder is provided with a plurality of gullies or grooves from which a plurality of protuberances emerge, which protuberances are provided with holes that cross the mantle of the cylinder.

The molten material exiting from the holes of the protuberances is transferred to the conveyor belt and, as mentioned, in part remains in adherence to the external surface of the cylinder.

The molten material which is not deposited tends to drip into the gullies or grooves, preventing the outlets of the holes made in the protuberances from being obstructed.

Further, the molten material which is collected in the gullies tends to combine with the material dispensed from the holes during the following revolution of the second cylinder and thus is deposited on the conveyor belt.

The molten material collected in the gullies tends to rise along the protuberances at each revolution of the second cylinder by effect of gravity and centrifugal force, mixing with the dispensed material and thus depositing on the conveyor belt.

The second type of dosage drum obviates the drawbacks of the first described type but incurs higher production costs with respect thereto.

The rotating cylinder of the second dosage drum requires mechanical working for removing material (for example milling) for realising both protuberances and gullies.

In particular, a plurality of milled gullies are realised, parallel to one another and parallel to the axis of symmetry and rotation of the cylinder, followed by milled gullies performed along circumferences parallel to one another and perpendicular to the axis of symmetry and rotation of the cylinder.

For example, the second cylinder is kept still and a mill is translated in order to realise parallel gullies to the axis of symmetry and rotation of the cylinder; thereafter the mill is kept still and the cylinder rotated in order to realise the millings along the circumferences which are parallel and perpendicular to the axis of symmetry and rotation of the cylinder.

In this way, rows of protuberances are generated which are parallel to and equidistanced from one another as well as being parallel to the rotation axis of the cylinder, and by gullies or gullies which are parallel to one another and perpendicular to the axis of rotation of the cylinder. In other words, observing the dosage drum in plan view, the second cylinder exhibits protuberances which are distributed in rows and columns that are reciprocally aligned and covered (like serried ranks of soldiers on parade).

Independently of production costs, the second type of drum in the prior art as described above, though enabling excellent depositing of the drops on to the conveyor belt, does not enable very high depositing rates of the drops. The arrangement of the protuberances on the external surface of the second cylinder (dictated by the above-described working process) means that each protuberance is distanced from the protuberances surrounding it by straight gullies, and therefore the rows and columns of protuberances must be placed at a predetermined distance (not zero) from one another.

In this context, the technical objective at the basis of the present invention is to provide a dosage drum for pastillation machines which obviates the drawbacks in the prior art as above-described.

In particular, an aim of the present invention is to make available a dosage drum for pastillation machines which enables optimal depositing of drops, with dropping rates that are superior to those of the prior art.

The set technical task and the set aims are substantially attained by a dosage drum for pastillation machines, comprising the technical characteristics set out in one or more of the accompanying claims.

Further characteristics and advantages of the present invention will better emerge from the following description which is made by way of non-limiting example of a preferred but not exclusive embodiment of a dosage drum for pastillation machines, as illustrated in the accompanying figures of the drawings, in which:
figure 1 is a schematic view of a pastillation machine comprising a dosage drum as in the present invention;
figure 2 is a perspective view of a detail of the dosage drum of figure 1;
figure 3 is a section view of the dosage drum of figure 1 along a plane that is perpendicular to the rotation axis of the dosage drum; and
figure 4 is a plan view of a detail of the drum of figure 2.

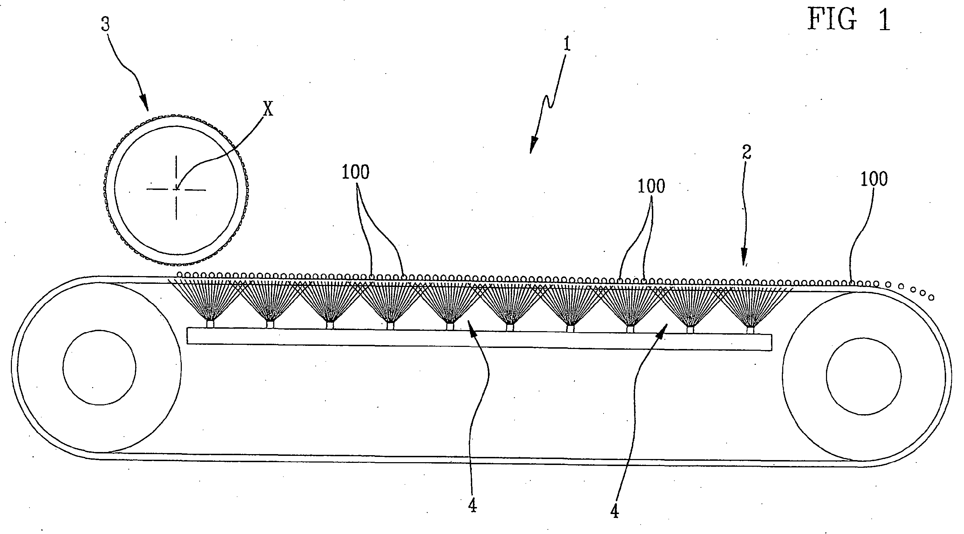

With reference to figure 1, numeral 1 denotes a pastillation machine in its entirety.

The pastillation machine 1 comprises a conveyor belt 2 on which a dosage drum 3 deposits a plurality of drops 100 of molten material at a dispensing zone 21.

The drops 100 deposited on the conveyor belt 2 are transferred therefrom towards a collecting device (not illustrated).

During transport of the drops 100, conditioning means 4 (schematically represented in figure 1 and constituted for example by jets of refrigerating fluid) acting on the conveyor belt 2 thermally treat the molten drops 100 (for example by cooling them) such that they solidify, becoming solid pastilles.

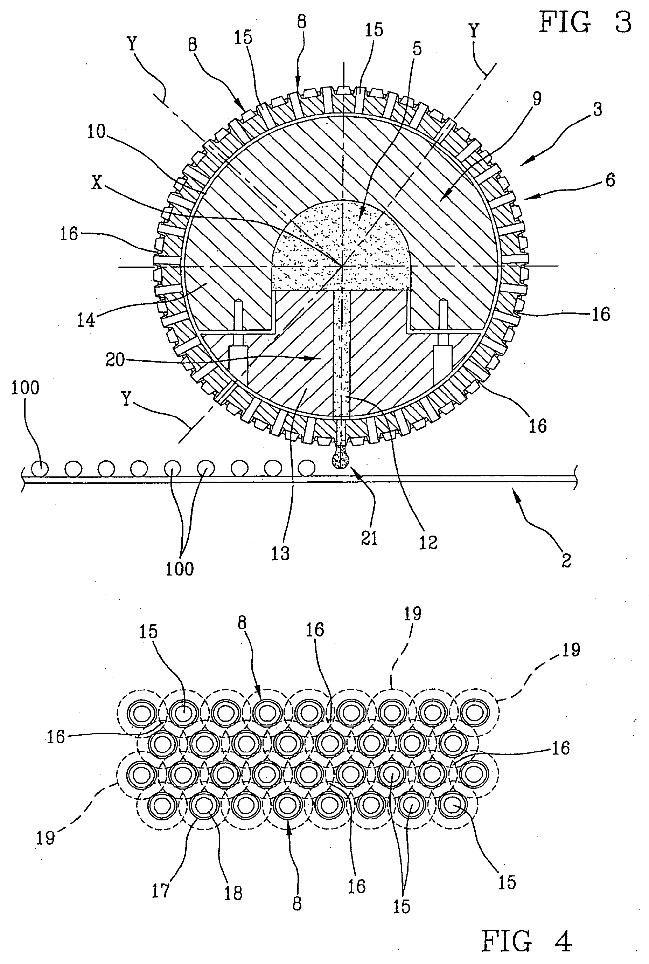

The dosage drum 3 comprises an internal cavity 5 destined to receive the mass of molten material which has to be deposited in drops on the conveyor belt 2 (see figure 3).

The internal cavity 5 is surrounded by a cylinder 6 rotating about a substantially horizontal axis X which comprises, on an external surface thereof 7, a plurality of protuberances 8 destined to deposit the drops 100 on the conveyor belt 2.

The internal cavity 5 is afforded in a fixed internal cylinder 9, i.e. a cylinder about which the rotating cylinder 6 rotates.

The external surface 10 of the internal cylinder 9 functions as a support and sliding surface for the rotating cylinder 6, in particular for the internal surface 11 thereof.

The internal cylinder 9 exhibits a plurality of conduits 12 which extend from the cavity 5 to the external surface 10 and which have the function of transferring the molten material contained in the cavity 5 towards the rotating cylinder 6 (in the section of figure 3 a single conduit 12 alone is illustrated).

In particular, the conduits 12 are aligned along a direction that is parallel to the axis of rotation of the rotating cylinder 6.

In the preferred embodiment of the invention, the internal cylinder 9 is defined by a base element 13, in which the conduits 12 are afforded, surmounted by and constrained to a heating element 14.

The heating element 14 has the function of maintaining the material to be transferred to the rotating cylinder 6 in the molten state.

The protuberances 8 are provided with through-channels 15 which extend between the internal surface and the external surface of the rotating cylinder 6, thus crossing it. During the rotation of the rotating cylinder 6, the through-channels 15 face the conduits 12 of the internal cylinder, placing the internal cavity 5 in fluid communication with the external environment.

In this way, the through-channels 15 deposit drops of molten material onto the conveyor belt 2 located below the dosage drum 3.

In any case, it is worthy of note that other dispensing means 20 of the fluid material in the viscous state can be adopted as long as they enable a correct and relative dispensing of material from the through-channels 15 when the channels 15 are at the dispensing zone 21.

Each channel 15 preferably defines an axis of symmetry Y for the protuberance 8 in which it is realised (figure 3). The axes of symmetry Y of the protuberances 8 ideally intersect on the axis of rotation X of the cylinder 6.

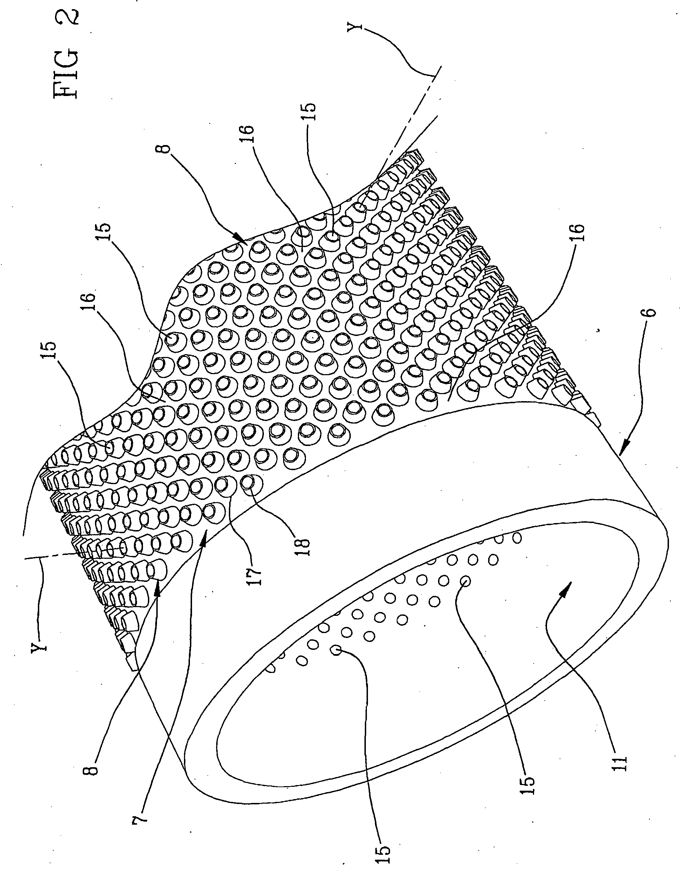

The protuberances 8 are separated from one another by gullies 16 which have the function of collecting the molten material which, though it has exited from the through-channels 15, has not deposited on the conveyor belt 2 (figure 2).

Note that a part of the molten material which exits from the through-channels 15 tends to remain in adherence on the rotating cylinder 6 by effect of the viscosity of the material.

The molten material collected in the gullies 16 tends to combine with the material dispensed by the through-channels 15 during the next revolution of the rotation cylinder 6 and thus is deposited on the conveyor belt 2. The molten material collected in the gullies 16 tends to rise along the protuberances 8 at each revolution of the rotating cylinder 6 by effect of gravity and centrifugal force, and mixes with the dispensed material, thus getting deposited on the conveyor belt 2.

This configuration of the dosage drum 3 does not therefore require the presence of scraping organs in order for it to function correctly.

To prevent the material collected in the gullies 16 from solidifying, or the molten material crossing the through-channels 15 from solidifying, the rotating cylinder 6 is heated by the heating element 14 of the internal cylinder. On this subject, the rotating cylinder 6 is made of a material which exhibits good heat conductivity, preferably metal, even more preferably stainless steel. The gullies 16 which separate the protuberances 8 preferably have a substantially curved development in a serpentine shape (see figure 2). In this way, the distance between a projection 8 and the adjacent projections 8 is minimised while, in a given like-for-like diameter, the rate of depositing of drops of molten material on the conveyor belt 2 with respect to the dosage drums of the prior art is increased.

With the preferred arrangement of the protuberances 8 on the external surface of the rotating cylinder 6, the protuberances 8 are arranged along two pluralities of rows which are parallel to one another and to the rotation axis X of the rotating cylinder 6.

In particular, the first plurality of rows is staggered with respect to the second plurality of rows of gullies 8.

The term "rows of gullies 8" is meant, within the context of the present invention, the gullies which lie along a straight line parallel to the rotation axis X of the cylinder and which lie on the external surface of the cylinder 6.

Therefore by rows of gullies 8 which are reciprocally staggered is meant two rows that are parallel to one another in which the gullies of a first row are located at different distances with respect to the gullies of the second row with respect to an end of the rotating cylinder 6 (see figure 2).

In other words, each protuberance 8 exhibits an axis of symmetry Y of the through-channel 15 lying on a perpendicular plane to the rotation axis X of the cylinder 6 and the lie planes of the axes Y of the through-channels 15 of the first plurality of rows are different from the lie planes of the axes Y of the through-channels 15 of the second plurality of rows.

The lie planes of the axes of the through-channels 15 are preferably equidistanced, such as to realise a density of protuberances 8 on the external surface of the cylinder 6 which is substantially constant along the whole development of the cylinder 6.

The protuberances 8 preferably have a truncoconical shape. Each protuberance 8 exhibits a circular base 17 facing towards the external surface of the rotating cylinder 6 and a circular end 18, having a smaller diameter than the base 17, which is distal to the external surface of the rotating cylinder 6 (figure 2). Advantageously, the protuberances 8 are made in a single piece with the rotating cylinder 6.

In particular, the dosage drum 3 is mechanically worked in order to remove a first portion of material from the external surface of the cylinder 6 such as to realise a circular trough 19.

The material not removed internally of the circular trough 19 defines a protuberance 8.

This operation is, for example, performed by using a mill to hollow out the surface of the cylinder 6 in order to realise a gully 8 (or a row of gullies 8) at a time.

Note that the gullies 16 are defined by the superposing of the circular troughs 19 which surround each protuberance 8.

In particular, figure 4 illustrates, in a broken line, the circular troughs 19 generated during the realisation of the drum 3.

Further note that each protuberance 8 is realised with a single mechanical milling operation.

The realising of all the protuberances 8 requires a number of single milling operations, equal to the number of all the protuberances 8.

The gullies 16 are thus realised gradually, as the protuberances 8 are realised.

Further, during the milling operation with realises each protuberance 8, a hole is made which defines the through-channel 15. The passage through-channel 15 and the circular trough are preferably realised at the same time by the same tool.

The invention attains the set aims.

The curved and serpentine development of the gullies 16 enables the distance between a projection 8 and the adjacent projections 8 to be minimised, while increasing, with a like rotation velocity of the cylinder 6 and with a like diameter thereof, the rate of depositing of drops of molten material on the conveyor belt 2 with respect to dosage drums of the prior art.

Further, the spiral shape of the gullies 16, together with the equal distance between the lie planes of the axes of symmetry Y of the projections 8 enables recycling of the molten material which is collected in the gullies to be optimised.

The depositing of the projections and the shape of the gullies prevents the molten material that has exited from a projection and not deposited on the conveyor belt from accumulating in the gullies in proximity of protuberances that are different from the protuberance from which the molten material exited, thus preventing damaging accumulations of molten materials which would be difficult to recycle.

## Claims

1. A dosage drum for pastillation machines, comprising:
an internal cavity (5) for receiving a mass of viscous fluid material;
a cylinder (6) arranged about the internal cavity (5) and rotating about a substantially horizontal rotation axis (X), the rotating cylinder (6) comprising, on an external surface thereof (7), a plurality of protuberances (8) which are separated from one another by gullies (16), the protuberances (8) comprising through-channels (15) designed to enable passage of the viscous fluid material,
dispensing means (20) for enabling selective exit of doses of the viscous fluid material at a dispensing area (21) through a predetermined number of the through-channels (15) located at the dispensing area (21),
**characterised in that** the gullies (16) which separate the protuberances (8) have a substantially curved development in a serpentine progression, wherein the protuberances (8) are arranged along at least two pluralities of rows which are parallel to one another and parallel to the rotation axis (x); the first plurality of rows being staggered with respect to the second plurality of rows.

2. The drum of the preceding claim, **characterised in that** the dispensing means (20) comprise at least a conduit (12) in fluid communication with the internal cavity (5), the through-channels (15) of the protuberances (8) being faceable, during the rotation of the cylinder (6), to the conduit (12) in order to place the internal cavity (5) in fluid communication with an outside environment and to deposit doses of the viscous fluid material in the dispensing area (21).

3. The drum of any one of the preceding claims, wherein the first plurality of rows in particular comprising rows interposed between the rows of the second plurality of rows.

4. The drum of claim 3, wherein each protuberance (8) exhibits an axis (Y) of the through-channel (15) lying on a perpendicular plane to the rotation axis (X) of the cylinder (6); the lie planes of the axes (Y) of the through-channels (15) of the first plurality of rows being different from lie planes of the axes (Y) of the through-channels (15) of the second plurality of rows, in particular the lie planes of the axes (Y) of the through-channels (15) being reciprocally equidistanced.

5. The drum of any one of the preceding claims, wherein the protuberances (8) are trunconical, each protuberance (8) exhibiting in particular a circular base (17) facing towards the external surface (7) of the rotating cylinder (6) and a circular end (18), having a smaller diameter than a diameter of the base (17), wihch is distal from the external surface (7) of the rotating cylinder (6).

6. The drum of any one of the preceding claims, wherein each protuberance (8) is made in a single piece with the rotating cylinder (6).

7. The drum of any one of the preceding claims, comprising heating means (14) active in the cavity (5) in order to maintain the mass of material in a viscous fluid state, in particular molten.

8. A method for realising a dosage drum of claim 1, comprising stages of predisposing a hollow cylinder (6), removing, from the external surface of the cylinder (6), a first portion of material in such a way as to realise a circular trough (19) containing one of the protuberances (8), repeating the stage of removing material from the external surface (7) of the cylinder (6) in order to realise the plurality of protuberances (8), wherein the stage of removing material further comprises the stage of realising a through-hole in the mantle of the cylinder (6) in order to define the through-channel (15), **characterized in that** each circular trough (19) realised superposes partially an adjacent circular trough (19) which has already been realised, such as to realise the gullies (16) with a substantially curved and serpentine development.

9. A pastillation machine comprising a conveyor belt (2) for transporting drops (100) of viscous fluid material, conditioning means (4) active on the conveyor belt (2) in order to solidify the drops (100), **characterised in that** it comprises a dosage drum (3) as in one or more of claims from 1 to 7 located above the conveyor belt (2) at a dispensing area (21) for depositing a plurality of drops (100) of material to be solidified thereon.

## Patentansprüche

1. Dosiertrommel für Tablettiermaschinen, umfassend:
einen inneren Hohlraum (5) zur Aufnahme einer Masse aus viskosem Fluidmaterial;
einen Zylinder (6), der um den inneren Hohlraum (5) angeordnet ist und sich um eine im Wesentlichen horizontale Drehachse (X) dreht, wobei der Drehzylinder (6) auf einer Außenfläche davon (7) eine Mehrzahl an Vorsprüngen (8) umfasst, die durch Rinnen (16) voneinander getrennt sind, wobei die Vorsprünge (8) Durchgangskanäle (15) umfassen, die ausgebildet sind, den Durchgang des viskosen Fluidmaterials zu ermöglichen,
Abgabemittel (20) zum Ermöglichen eines selektiven Austritts von Dosen des viskosen Fluidmaterials in einem Abgabebereich (21) durch eine vorbestimmte Anzahl der Durchgangskanäle (15), die sich am Abgabebereich (21) befinden,
**dadurch gekennzeichnet, dass** die Rinnen (16), die die Vorsprünge trennen (8), eine im Wesentlichen gekrümmte Entwicklung mit einer gewundenen Progression besitzen,
wobei die Vorsprünge (8) entlang zumindest zwei Mehrzahlen an Reihen, die parallel zueinander und parallel zur Drehachse (X) sind; wobei die erste Mehrzahl an Reihen mit Bezug auf die zweite Mehrzahl an Reihen versetzt ist.

2. Trommel nach dem vorhergehenden Anspruch, **dadurch gekennzeichnet, dass** die Abgabemittel (20) mindestens eine Leitung (12) in Fluidkommunikation mit dem inneren Hohlraum (5) umfassen, wobei die Durchgangskanäle (15) der Vorsprünge (8) während der Drehung des Zylinders (6) der Leitung (12) zugewandt sein können, um den inneren Hohlraum (5) in Fluidkommunikation mit einer Außenumgebung zu setzen und Dosen des viskosen Fluidmaterials im Abgabebereich (21) abzulagern.

3. Trommel nach einem der vorhergehenden Ansprüche, wobei die erste Mehrzahl an Reihen insbesondere Reihen umfasst, die zwischen den Reihen der zweiten Mehrzahl an Reihen angeordnet sind.

4. Trommel nach Anspruch 3, wobei jeder Vorsprung (8) eine Achse (Y) des Durchgangskanals (15) aufweist, die auf einer Ebene senkrecht zur Drehachse (X) des Zylinders (6) liegt; wobei die Lageebenen der Achsen (Y) der Durchgangskanäle (15) der ersten Mehrzahl an Reihen verschieden sind von den Lageebenen der Achsen (Y) der Durchgangskanäle (15) der zweiten Mehrzahl an Reihen, wobei insbesondere die Lageebenen der Achsen (Y) der Durchgangskanäle (15) im gleichen Abstand zueinander sind.

5. Trommel nach einem der vorhergehenden Ansprüche, wobei die Vorsprünge (8) kegelstumpfförmig sind, wobei jeder Vorsprung (8) insbesondere eine kreisförmige Basis (17), die der Außenfläche (7) des Drehzylinders (6) zugewandt ist, und ein kreisförmiges Ende (18), das einen kleineren Durchmesser besitzt als ein Durchmesser der Basis (17), aufweist, das von der Außenfläche (7) des Drehzylinders (6) distal ist.

6. Trommel nach einem der vorhergehenden Ansprüche, wobei jeder Vorsprung (8) einstückig mit dem Drehzylinder (6) ausgeführt ist.

7. Trommel nach einem der vorhergehenden Ansprüche, umfassend Heizmittel (14), die im Hohlraum (5) aktiv sind, um die Masse des Materials in einem viskosen flüssigen Zustand zu halten, insbesondere geschmolzen.

8. Verfahren zur Herstellung einer Dosiertrommel nach Anspruch 1, umfassend die Schritte des Vorbereitens eines Hohlzylinders (6), Entfernen von der Außenfläche des Zylinders (6) eines ersten Teils des Materials, um eine kreisförmige Mulde (19) herzustellen, die einen der Vorsprünge (8) enthält, Wiederholen des Schrittes des Entfernens des Materials von der Außenfläche (7) des Zylinders (6), um die Mehrzahl an Vorsprüngen (8) herzustellen, wobei der Schritt von Entfernen des Materials den Schritt weiter umfasst von Herstellen eines Durchgangslochs im Mantel des Zylinders (6), um den Durchgangskanal (15) zu definieren, **dadurch gekennzeichnet, dass** jede hergestellte kreisförmige Mulde (19) eine benachbarten kreisförmige Mulde (19), die bereits hergestellt worden ist, teilweise überdeckt, um die Rinnen (16) mit einer im Wesentlichen gekrümmten und gewundenen Entwicklung herzustellen.

9. Tablettiermaschine, umfassend ein Förderband (2) zum Transportieren von Tropfen (100) von viskosem Fluidmaterial, Konditionierungsmittel (4), die auf dem Förderband (2) aktiv sind, um die Tropfen (100) zu verfestigen, **dadurch gekennzeichnet, dass** es eine Dosiertrommel (3) nach einem oder mehreren der Ansprüche 1 bis 7 umfasst, die sich über dem Förderband (2) in einem Abgabebereich (21) befindet, zum Abscheiden einer Mehrzahl an Tropfen (100) des Materials, die darauf verfestigt werden sollen.

## Revendications

1. Tambour de dosage pour machines de pastillage, comprenant:
une cavité interne (5) destiné à recevoir une masse de matériau fluide visqueux;
un cylindre (6) rangé autour de la cavité interne (5) et tournant autour d'un axe de rotation sensiblement horizontal (X), le cylindre rotatif (6) comprenant, sur une surface externe de celui-ci (7), une pluralité de protubérances (8) qui sont séparées les unes des autres par des rigoles (16), les protubérances (8) comprenant des canaux de passage (15) aptes à permettre le passage du matériau fluide visqueux,
des moyens de distribution (20) destinés à permettre la sortie sélective de doses du matériau fluide visqueux dans une zone de distribution (21) à travers un nombre prédéterminé de canaux de passage (15) situés dans la zone de distribution (21),
**caractérisé en ce que** les rigoles (16) qui séparent les protubérances (8) ont un développement sensiblement courbé dans une progression en serpentin, où les protubérances (8) sont rangées le long d'au moins deux pluralités de lignes qui sont parallèles les unes aux autres et parallèles à l'axe de rotation (X); la première pluralité de lignes étant décalée par rapport à la deuxième pluralité de lignes.

2. Tambour selon la revendication précédente, **caractérisé en ce que** les moyens de distribution (20) comprennent au moins un conduit (12) en communication de fluide avec la cavité interne (5), les canaux de passage (15) des protubérances (8) pouvant être placés en face, lors de la rotation du cylindre (6), du conduit (12) afin de mettre la cavité interne (5) en communication de fluide avec un environnement extérieur et de déposer les doses du matériau fluide visqueux dans la zone de distribution (21).

3. Tambour selon l'une quelconque des revendications précédentes, où la première pluralité de lignes comprend notamment des lignes intercalées entre les lignes de la deuxième pluralité de lignes.

4. Tambour selon la revendication 3, où chaque protubérance (8) présente un axe (Y) du canal de passage (15) se trouvant sur un plan perpendiculaire à l'axe de rotation (X) du cylindre (6); les plans de positionnement des axes (Y) des canaux de passage (15) de la première pluralité de lignes étant différents des plans de positionnement des axes (Y) des canaux de passage (15) de la deuxième pluralité de lignes, notamment les plans de positionnement des axes (Y) des canaux de passage (15) étant mutuellement équidistants.

5. Tambour selon l'une quelconque des revendications précédentes, où les protubérances (8) sont tronconiques, chaque protubérance (8) présentant en particulier une base circulaire (17) en face de la surface externe (7) du cylindre rotatif (6) et une extrémité circulaire (18), ayant un diamètre inférieur à un diamètre de la base (17), qui est distale par rapport à la surface externe (7) du cylindre rotatif (6).

6. Tambour selon l'une quelconque des revendications précédentes, où chaque protubérance (8) est réalisée en une seule pièce avec le cylindre rotatif (6).

7. Tambour selon l'une quelconque des revendications précédentes, comprenant des moyens de chauffage (14) actifs dans la cavité (5) afin de maintenir la masse de matériau à l'état fluide visqueux, en particulier en fusion.

8. Procédé de réalisation d'un tambour de dosage selon la revendication 1, comprenant les étapes de préparer un cylindre creux (6), éliminer de la surface externe du cylindre (6) une première portion de matériau de manière à réaliser un creux circulaire (19) contenant l'une des protubérances (8), répéter l'étape d'élimination du matériau de la surface extérieure (7) du cylindre (6) pour réaliser la pluralité de protubérances (8), où l'étape d'éliminer du matériau comprend en outre l'étape de réaliser un trou de passage dans l'enveloppe du cylindre (6) afin de définir un canal de passage (15), **caractérisé en ce que** chaque creux circulaire (19) réalisé se superpose partiellement à un creux circulaire adjacent (19) qui a déjà été réalisé, de manière à réaliser les rigoles (16) avec un développement sensiblement courbée et en serpentin.

9. Machine de pastillage, comprenant une bande transporteuse (2) destinée à transporter des gouttes (100) de matériau fluide visqueux, des moyens de conditionnement (4) actifs sur la bande transporteuse (2) pour solidifier les gouttes (100), **caractérisée en ce qu'**elle comprend un tambour de dosage (3) selon l'une ou plusieurs des revendications 1 à 7 situé au-dessus de la bande transporteuse (2) dans une zone de distribution (21) pour déposer une pluralité de gouttes (100) de matériau à solidifier sur celle-ci.
